(19) 〔Europäisches Patentamt / European Patent Office / Office européen des brevets〕

(11) **EP 4 635 169 B1**

(12) **EUROPEAN PATENT SPECIFICATION**

(45) Date of publication and mention
of the grant of the patent:
**08.07.2026 Bulletin 2026/28**

(21) Application number: **23814504.9**

(22) Date of filing: **05.12.2023**

(51) International Patent Classification (IPC):
*H04N 9/64* $^{(2023.01)}$    *H04N 1/407* $^{(2006.01)}$
*G06T 5/00* $^{(2024.01)}$    *H04N 1/64* $^{(2006.01)}$
*G06T 5/92* $^{(2024.01)}$    *H04N 19/98* $^{(2014.01)}$

(52) Cooperative Patent Classification (CPC):
**H04N 9/64; G06T 5/92; H04N 1/646; H04N 19/98;**
G06T 2207/20208; H04N 1/407

(86) International application number:
**PCT/EP2023/084190**

(87) International publication number:
**WO 2024/126144 (20.06.2024 Gazette 2024/25)**

(54) **IMAGE PROCESSING APPARATUS AND IMAGE PROCESSING METHOD**

BILDVERARBEITUNGSVORRICHTUNG UND BILDVERARBEITUNGSVERFAHREN

APPAREIL ET PROCÉDÉ DE TRAITEMENT D'IMAGE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **15.12.2022 EP 22213709**

(43) Date of publication of application:
**22.10.2025 Bulletin 2025/43**

(73) Proprietor: **Koninklijke Philips N.V.
5656 AE Eindhoven (NL)**

(72) Inventor: **TICHELAAR, Johannes Yzebrand
5656 AG Eindhoven (NL)**

(74) Representative: **Philips Intellectual Property &
Standards
High Tech Campus 34
5656 AE Eindhoven (NL)**

(56) References cited:
**US-A1- 2019 082 186    US-A1- 2021 272 497**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD OF THE INVENTION

The invention relates to an image processing apparatus.
The invention further relates to an image processing method.

BACKGROUND OF THE INVENTION

Until a couple of years ago, all video was encoded according to the so-called low dynamic range (LDR) paradigm, also called standard dynamic range (SDR). Nowadays video content is available with various dynamic ranges. Not all display equipment is configured to handle any dynamic range. For example older display types may only be capable to display LDR video data. Newer displays may require high dynamic range (HDR) video data. Low dynamic range coded (and displayed) images were good to convey objects under substantially uniform illumination (i.e. the own light absorptions and therefore own colors of the objects, ranging from a strongly absorbing object - which would if emitting only 1% of the illumination light be seen as a good, deep black - to an object reflecting nearly all of the incoming light appearing white (or maximum, or 100%), and e.g. an object absorbing all the reds, yellows, and green frequencies sending only an amount of approximately 10% of the illumination to the camera (or virtual camera in computer graphics), which would as to its color appearance yield a blue chromaticity). If there is a significant non-uniformity in the scene lighting (e.g. > 10/1, where e.g. an inside of an object like a room may be typically 100x darker than outside on average), the indoors light level being the base lighting (corresponding to the Lambertian white brightness or luminance under that lower illumination being the 100% SDR level), brighter lit (or reflecting, such as when displaying specular reflection of a light source on a part of the object) objects would need higher than 100% brightness or luminance values. I.e. higher than the SDR maximum brightness (i.e. SDR white) would define, and also can encode in its standard encoding (Rec. 709 OETF). Thereto various coding mechanisms exist to specify (e.g. for television or video broadcast or narrowcast) those brighter pixels (than SDR white). The dynamic range of a display is substantially determined primarily by the maximum displayable luminance PL_D and to a lesser extent by the darkest displayable pixel luminance BL_D (which under several scenarios can be assumed fixed, e.g. 0.1 nit). The latter however also depends on other circumstances, such as the illumination of the viewing room. So the below principles may be used in various technical systems, apparatuses, or methods, which are based on luminance processing, whether that be for defining image pixel colors, modifying (e.g. brightening or darkening) pixel colors etc. We can e.g. think of displays, mobile phones, coders or transcoders for storage, etc.
Accordingly, there is a need for means to provide for a dynamic range conversion between the dynamic range with which the video is encoded and the dynamic range of the display.
A number of luminance mappings start from Low Dynamic Range pixels, in which the luminances are represented as luma codes (e.g. 0-1023 in 10 bit), which are defined according to the Rec. 709 LDR EOTF, which as a quite fair approximation can be said to have the shape of a square root function. In addition to the luma code Luma $Y' = SQRT(Y)$, in which Y is the (linear, photon counting luminance, and the dash shows the non-linearity of the luma representation cos of the sqrt), also non-linear color components are defined, namely $R'=sqrt(R)$, $G'= sqrt(G)$ and $B'= sqrt(B)$, in which R is the amount of red light (red photons) needed to create some color, with some hue and saturation following from the distribution of red versus green and blue, and the luminance follows from the total amount of (linear) R,G, and B. So one can add more luminance, by giving more photons distributed equally over red, green and blue components, according to some weighing scheme, which also defines the equation for calculating the luminance if one knows the R,G,B components of a color:

$$Y = \alpha_r R + \alpha_g G + \alpha_b B \qquad\qquad\qquad [Eq.\ 1]$$

The exact values of $\alpha_r$, $\alpha_g$ and $\alpha_b$, depend on the primaries chosen for any display, e.g., the eye will see a saturated blue somewhat darker than a less saturated blue, so it will give less contribution to the total luminance perceived, etc. A good key value for typical primaries (e.g. EBU primaries as typically co-used with the Rec. 709 video coding) is $\alpha_r$ = 0.21251; $\alpha_g$ = 0.71535; $\alpha_b$ = 0.07214.
LDR video typically comes in as the (gamma) non-linear coded color components, R', G', B', which typically are defined in a system coding their differences: Cr= K*(R'-Y'); Cb=L*(B'-Y') [K,L are normalizing constants standardized for the chosen video system] forming together the pixel color Y'CbCr, i.e. luma + two color-defining chroma components.
One defines such a luma Y' with the same equation and constants

$$Y' = \alpha_r R' + \alpha_g G' + \alpha_b B' \ldots \qquad\qquad\qquad [Eq.2]$$

Whilst this luma component may work nicely for coding (as it can be reverted to the needed R,G,B components telling the display how much colored light to show in each color subpixel on the screen, this is not a good measure of luminance for doing image processing.

It can be shown mathematically that, due to the gamma non-linearity, the luminance, which should be constant for any common multiplier of amount of photons in the three components (e.g. R*m, B* m >> R'* sqrt(m), etc.) , the luminance when squaring the luma coding of the luminance, is not constant, as it should for RGB distributions which re-distribute photons over the components (e.g. more saturated blue taken from less red and green) in exactly such a manner that for all such different color balances Eq. 1 -i.e. the exact luminance equation- gives the same output. Rather, the luma will vary for different proportioning of the R,G,B components, and typically go down if we make a more saturated combination, i.e. which moves away from achromatic grey R=G=B towards e.g. much red, and little G and B (leak of luminance in the color components).

So, if we want to do a processing of luminance (correctly) everywhere in the color gamut of realizable colors ( 0<=R<=1; 0<=G<=1; 0<=B<=1), we must always accurately calculate the luminance, for each pixel, and that can be costly (especially if many bits are needed, because we want to transform a highly accurate LDR pixel color which is to become a HDR color on a much larger luminance range, i.e. less error tolerant to the human eye). Examples - non-limiting- of such apparatuses are decoders which decode an LDR image, which is actually a proxy (for communication) of an original master HDR image (which can be reconstructed on the basis of the directly SDR display displayable proxy images by applying luma or luminance mapping functions co-communicated in metadata of the HDR signal, which functions code the relationship between the SDR luminances in the received proxy image and the HDR images of the reconstruction, which are substantially identical to master HDR images of a conent creator, with pixel luminances ranging as far up as e.g. 5000 nit) .

I.e. the encoder has encoded the M_HDR image as an LDR image, directly suitable for display without further color optimization on older LDR displays: Y_LDR= F(Y_M_HDR), with F being some function elected by the encoder to gives a good coding and visual result as an LDR image corresponding to the M_HDR image. And decoders connected to a HDR display must then invert that function, to re-obtain the HDR pixel luminances: Y_M_HDR=F-1(Y_LDR); but then apart from the decoder receiving or knowing the appropriate function F_L, also the LDR luminances should be of high precision to avoid mathematically introduced errors like visual banding in the displayed image. It should however also be avoided that decoding involves undue computational efforts. This also applies to other applications wherein a conversion is required from a dynamic range of the available video and the dynamic range of the display with which it is to be reproduced.

US2021/0272497 teaches some examples of how one can coordinate the (visually similarly looking to the extent possible by the smaller gamut) mapping of luminances and chromas (i.e. own colors, since some processing technologies can significantly change e.g. the pixel hue) of pixels from before to after a dynamic range conversion, i.e. conversion to a gamut with a significantly different span of representable luminances of the various image pixels.

US2019/0082186 teaches that when also a spatial subsampling of the chroma components is involved (i.e. the communicated images don't have full resolution), any gain-based processing should be coordinated.

SUMMARY OF THE INVENTION

It is a first object of the present invention to provide an image processing apparatus that is capable to provide a reasonably accurate approximation of the mathematically correct luminance corresponding to an input color with a modest computational effort.

In accordance with the first object we teach an improved image processing apparatus (1) to obtain an output luminance (Lo) from non-linear color components (R', G', B') that specify an input color, the image processing apparatus comprising:

> a luminance calculation circuit (2) and
> a luminance mapper (3) or luma mapper,
> the luminance calculation circuit (2) configured to compute an output value as a function P of a first input value and a second input value at respective inputs,

which function:

> selects one of said first input value and said second input value that is greater than or equal to the other one of said first input value and said second input value as a primary value;
> selects the other one of said first input value and said second input value as a secondary value;
> computes the output value as a linear weighting of the primary value and the secondary value if the primary value is less than a product of the secondary value with a constant, and determines the primary value as the output value otherwise,

the luminance calculation circuit (2) being configured to:

apply the function P to compute a first intermediary output value (V1) with a first one (R") and a second one (B") of a set of intermediate color components (R", G",B") at its respective inputs; and

subsequently apply the function P to compute a second intermediate value (V2) with the first intermediate output value (V1) and a third one (G") of the set of intermediary color components at its respective inputs, and the image processing apparatus being configured to obtain an input luminance (Li) as a power of the second intermediate value (V2), and the luminance mapper (3) being configured to apply a luminance mapping function to the input luminance (Li) to obtain an output luminance (Lo) or a luma mapper being configured to apply a luma function to the second intermediate value. The luminance calculation circuit is configured to calculate an input luminance from non-linear color components that specify an input color of a pixel of an input image. The luminance mapper is an electronic circuit which is configured to apply a luminance mapping function to the input luminance to obtain an output luminance. Alternatively, the luminance mapping can be performed by a luma mapping circuit, which performs the same luminance change but in the luma domain (but in contradistinction with classical luma mapping preferably <u>in a constant luminance luma domain</u> as output of our luma calculation circuit embodiments). Once having established a good value of the input luminance, rather than directly applying a luminance mapping function to that (one-dimensional) color component, one can also equivalently apply it is any luma domain (e.g. one may convert both input and output space to SMPTE 2084 lumas, by mapping each luminance to its corresponding 2084-luma, and apply the re-shaped luminance mapping function, which is then a luma mapping function, on those luma domains (but that is an implementation details configurable orthogonally to the here presented innovative techniques).

A substantial reduction in computational effort while avoiding a substantial loss in accuracy is achieved in that the luminance calculation circuit in computing the input luminance uses a function P which is defined as follows.

The function P selects one of a first input value and a second input value that is greater than or equal to the other one of the first input value and the second input value as a primary value. In case the first input value and the second input value are equal, it does not matter which one is selected. In an embodiment the function always select the first input value or always select the second input value if neither is greater than the other to always guarantee a selection, or even arbitrarily select one of the input values.

When the primary value and the secondary value are selected, the function determines if the primary value is less than a product of the secondary value with a constant. If this condition is complied with the function computes the output value as a linear weighting of the primary value and the secondary value. Otherwise the function determines that the output value is equal to the primary value.

The luminance calculation circuit first applies the function P to compute a first intermediary output value with a first one, and a second one of a set of intermediate color components at its respective inputs.

Subsequently it applies the function P to compute a second intermediate value with the first intermediate output value and a third one of the set of intermediary color components at its respective inputs.

The luminance calculation circuit then obtains the input luminance as a power of the second intermediate value.

The intermediate color components are respective weighted values of the non-linear input color components. The weights with which the non-linear input color components are multiplied are characteristic for a primary video coding system. For the Rec. 709 video coding convention the weights are typically the square root of the values $\alpha_r$, $\alpha_g$ and $\alpha_b$ and the power with which the second intermediate value is raised to obtain the input luminance is a square power. In general, the weights are the one-over-Gamma power of the values $\alpha_r$, $\alpha_g$ and $\alpha_b$ and the power with which the second intermediate value is raised to obtain the input luminance is a power to Gamma, where Gamma is typically the Gamma specified of the Electro-optical transfer function standardized in BT.1886 (=2.4), DCI-P3 SMPTE ST 2113 (=2.6), or 2.0.

The luminance calculation circuit subsequently applies the function P to a first one, and a second one of the intermediate color components and subsequently to the first intermediate output value and a third one of the intermediary color components. The selection of the third one of the intermediate color components to be provided as input in the subsequent application of the function P also determines the selection of the remaining two of the intermediate color components to be provided as input in the first application of the function P. In principle any of the intermediate color components can be selected as the third one. Typically, however, the green color component provides a dominating contribution to the luminance. By selecting the green color component as the third intermediate color component, an approximation error is introduced in only one stage of the luminance calculation circuit. Therewith on average best results are obtained if the weighted value of the non-linear input color component for the green color component is selected as the third one of the set of intermediary color components is.

**In** an embodiment of the image processing apparatus, the linear weighting used for computing the first intermediary output value and/or the second intermediary output value comprises weighting the primary value with a primary weight and weighting the secondary value with a secondary weight, wherein the constant is equal to the value of the secondary weight divided by one minus the primary weight. With this relationship the actual luminance is optimally approximated for a specified primary weight and secondary weight. It is not necessary that a same embodiment of the function P is applied to the first one and the second one of the intermediate color components and to the first intermediate output value and the third one of the intermediary color components. However, it is advantageous to use the same embodiment of the function P so as to minimize hardware and/or software complexity.

In an embodiment of the image processing apparatus the primary weight is 7/8 and the secondary weight is 1/2. In this embodiment a near optimal approximation is obtained with a simple implementation of the multiplications by addition and shift operations.

In another embodiment of the image processing apparatus the primary weight is approximately 0.898 and the secondary weight is approximately 0.486. In this embodiment the mathematically correct luminance is approximated with a still higher accuracy and in a bias free manner.

The present invention also provides a dynamic range conversion apparatus to convert an input image with a first maximum luminance into an output image with a second maximum luminance different from the first maximum luminance. The dynamic range conversion apparatus provided herewith comprises an image processing apparatus as specified above to obtain an output luminance of pixels of the output image from non-linear color components of respective pixels of the input image. In one example of the dynamic range conversion apparatus provided herewith the second maximum luminance is greater than the first maximum luminance. In another example thereof the second maximum luminance is less than the first maximum luminance.

The present invention further provides a video communication system that comprises a video encoder for encoding input video data from a video source into a compressed video signal, a transmission channel for transmitting the compressed video signal to a video decoder for decoding the compressed video signal into a reconstructed video signal. The video decoder of the video communication system provided herewith comprises an image processing apparatus or a dynamic range conversion apparatus as described above.

The image processing apparatus or the dynamic range conversion apparatus comprising is particularly suitable in a video decoder of a such a video communication system wherein the color components are non-linearly encoded e.g. raised to the power of $1/y$, wherein $y$ is in a range of about 1.8 to about 3 e.g. about 2.4. A gamma or power value of 2.6 may also be useful. In some examples the value $y$, so that the color components are effectively coded by a square root function.

In typical embodiments of the video communication system provided herewith the video encoder provides in addition to the compressed video signal metadata for transmission to the video decoder. The metadata is indicative for a video coding applied by the video encoder and the video decoder decodes the compressed video signal in accordance with the metadata. The metadata may be updated periodically or otherwise to communicate changes in applied video encoding parameters, for example to optimally adapt the applied coding to the video content. In one example the metadata is MPEG Supplemental Enhancement Information data SEI(F_ct) or a similar type of metadata for other standardized or unstandardized communication methods.

The present invention further provides an improved image processing method that comprises calculating an input luminance from non-linear color components that specify an input color and applying a luminance mapping function to the input luminance to obtain an output luminance (or a corresponding luma mapping function, to the luma which codes the luminance, and is intermediate output V2 of our method of luminance calculation). The improved method involves accurately approximating a mathematically correct input luminance value in a computationally efficient manner with a function P. The function P referred to selects one of a first input value and a second input value that is greater than or equal to the other one of said first input value and said second input value as a primary value. I.e. the primary value is equal to the maximum of the first input value and the second input value. The other one of the first input value and the second input value is selected as a secondary value. I.e. the secondary value is the minimum of the two input values. The function P further computes the output value as a linear weighting of the primary value and the secondary value if the primary value is less than a product of the secondary value with a constant, and determines the primary value as the output value otherwise. Accordingly the function P merely requires two multiplications and an addition and two comparisons. If it is determined in the second comparison that the primary value is substantially larger than the secondary value, i.e. at least equal to the product of the secondary value with a constant, then even the multiplications and the addition are avoided.

The improved method calculates the input luminance with the function P in a first and a second stage.

In the first stage it applies the function P to compute a first intermediary output value with a first one and a second one of a set of intermediate color components at its respective inputs. In the second stage it applies the function P to compute a second intermediate value with the first intermediate output value and a third one of the set of intermediary color components at its respective inputs. The intermediate color components are respective weighted values of the non-linear input color components multiplied by respective weights that are characteristic for a primary video coding system.

The improved method then obtains the input luminance as a power of the second intermediate value obtained in the second stage.

Useful further embodiments of the various apparatus (image processing or dynamic range conversion) embodiments, or method embodiments can be used in HDR image or video coding, e.g.:

A video decoder (220) arranged to receive a high dynamic range video signal comprising a set of input images, which comprise pixels which have pixel colors which are defined by three additive color components which are specified as non-linear red, green and blue color components defined according to an opto-electrical or electro-optical transfer function (at least when being or being approximatable by a power function, or convertibe to a secondary coding represented by an EOTF which is a power function, e.g. receiving HLG lumas and before calculation first converting them to power 3 lumas), or a 3x3 matrixed version of the non-linear red, green and blue color components such as a Y'CbCr color representation, and arranged to obtain a luminance mapping function (F_ct), e.g. from an internal memory or extracted from received metadata in the video signal, the decoder being arranged to apply said luminance mapping function to said pixel colors to obtain corresponding pixel luminances of output colors of respective decoded images corresponding to the input images, wherein the video decoder comprises an image processing apparatus (1) according to any of the above image processing apparatus claims to effectuate such luminance mapping for decoding.

The various conversions (except for the luminance mapping function, which may typically vary per image, or at least per scene, a dark cave needing different luminance mapping to obtain e.g. a SDR image corresponding to an optimally color graded master HDR image at the creation side than a daylight scene in a snow landscape with an explosion) are typically using fixed, pre-agreed (or sometimes configurable, e.g. identifiable by codes in metadata communicated in the transmitted video signal). E.g., the matrix between the RGB and YCbCr additive representation of pixel colors is well-known in the art of colorimetry and television signal communication, depends on the elected additive primaries of the color definition (e.g. EBU, DCI-P3, Rec. 2020, etc.), and can be looked up in the corresponding published standards. The EOTF, or its inverse, the OETF, which specify how various pixel luminances are to be represented (e.g. for communication) as corresponding e.g. 10 bit luma codes, are also standardized, e.g. the perceptual quantizer in SMPTE ST 2084. The decoder will receive the images as communicated, and either display those faithfully as they were created (i.e. displaying exactly those pixel luminances on the display as the video creator defined them in the HDR signal, provided of course the receiving side display can display so brightly), or there may be a display adaptation involved, where the display down-maps the luminances to the range it can display (e.g. mapping the video maximum of 5000 nit, i.e. the brightest pixel in say an explosion, to the brightest displayable luminance being 450 nit, and all luminances below with a re-distribution defined in the shape of the luminance mapping function). The present invention is usable both in decoders which use their internal best estimate of a well-working luminance mapping function (which may be fixed even for the entire movie, or even all television programs from all channels), or it may use a function derived on the basis of the reference luminance function co-communicated in metadata, e.g. SEI messages, of the received HDR video signal (typically such reference luminance mapping function shows how the luminances should be mapped from the master e.g. 5000 nit maximum luminance range, i.e. the perfect reconstruction, of the received images, to some lower reference level, e.g. 100 nit SDR image, and the receiving side display or other apparatus may then derive a derived (display adapted) luminance mapping function for mapping the 5000 nit maximum range pixel luminances (or there proxys, e.g. when a 100 nit SDR proxy image is communicated) to the actual range of any user's display (e.g. ranging between 0.1 and 450 nit). This can be done in various manners, the exact details of which are unnecessary to understand the present innovative embodiments.

A video encoder (220) arranged to receive an original set of high dynamic range video images, which comprise pixels which have pixel colors which are defined by three additive color components which are specified as non-linear red, green and blue color components defined according to an opto-electrical or electro-optical transfer function, or a 3x3 matrixed version of the non-linear red, green and blue color components such as a Y'CbCr color representation, and arranged to obtain a luminance mapping function (F_ct), e.g. from an internal memory or extracted from received metadata, the encoder being arranged to apply said luminance mapping function to said pixel colors to obtain corresponding pixel luminances of output colors of respective output images corresponding to the input images, wherein the video decoder comprises an image processing apparatus (1) according to any of the above image processing apparatus claims, and a formatting unit connected to a video communication channel to delivered a formatted version of the output images. Preferably the method works with SDR displayable input images, which are definable with a power ½.

Encoders may typically start from original images, e.g. coming from a capture capturing after initial rough color shaping, or being accurately color graded on a computer during an offline e.g. movie production, and the conversion of those original colors to the colors of some HDR image version to be communicated (proxy or not) then may also typically involve luminance mapping for which the present apparatuses and methods may be advantageously used.

BRIEF DESCRIPTION OF THE DRAWINGS

These and other aspects of any variant of the method and apparatus according to the invention will be apparent from and elucidated with reference to the implementations and embodiments described hereinafter, and with reference to the accompanying drawings, which drawings serve merely as non-limiting specific illustrations exemplifying the more general concept, and in which dashes are used to indicate that a component is optional, non- dashed components not necessarily being essential. Dashes can also be used for indicating that elements, which are explained to be essential, are hidden in the interior of an object, or for intangible things such as e.g. selections of objects/regions, indications of value levels in charts, etc.

In the drawings:

    FIG. 1 shows a video communication system;

    FIG. 2 shows an image processing apparatus which may be used in the video communication system;

    FIG. 3 shows a component of a first embodiment of the image processing apparatus;

    FIG. 4 shows a component of a second embodiment of the image processing apparatus;

    FIGs. 5A, 5B show simulation results obtained using the second embodiment;

    FIGs. 6A, 6B show simulation results obtained using the first embodiment;

    FIGs. 7A, 7B show simulation results obtained using the first embodiment to approximate a different function;

    FIG. 8 and FIG. 9 respectively show simulation results for approximating two further different functions;

    FIGs. 10A, 10B show suitable parameter values for use in the first embodiment in an application range.

DETAILED DESCRIPTION OF THE EMBODIMENTS

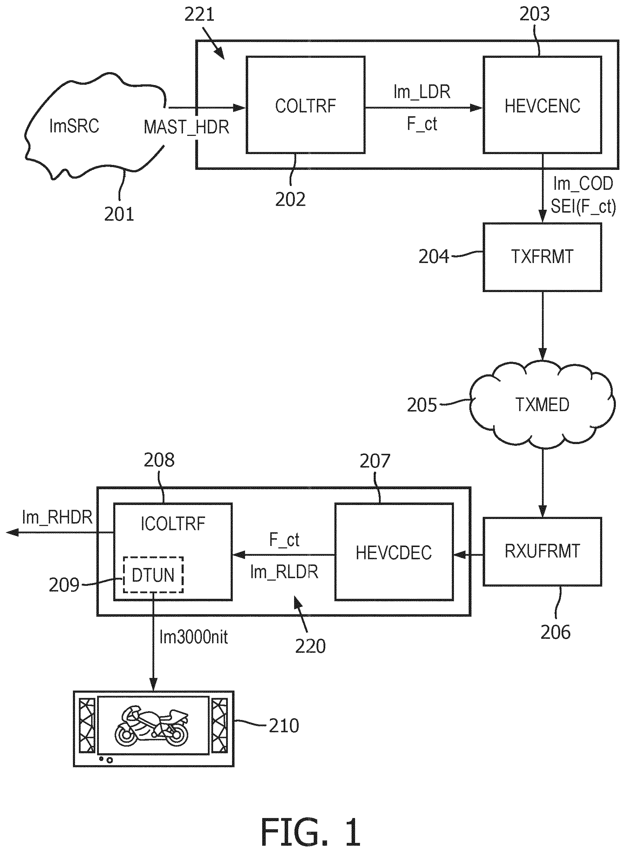

FIG. 1 schematically shows a video communication system comprising a video encoder 221, a transmission channel 204, 205, 206, and a video decoder 220.

The video encoder 221 is provided for encoding input video data MAST_HDR from a video source ImSRC into a compressed video signal Im_COD. Depending on whether one has offline created video, e.g. from an internet-delivery company, or real-life broadcast, the video source may be anything ranging from a hard disk to a cable output from e.g. a television studio, etc.

This yields the master HDR video MAST_HDR e.g. color graded by the human color grader, or a shaded version of a camera capturing, or by means of an automatic luminance re-distribution algorithm, etc. The video encoder, in this example comprising a color transformer 202 and a video compressor 203, in addition to grading a master HDR image, performs a set of often reversible color transformation functions F_ct is defined. Without intending to lose generalization, we assume this to comprise at least one luminance mapping function F_L (however, there may be further functions and data, e.g. specifying how the saturation of pixels should change from the HDR to the SDR grading).

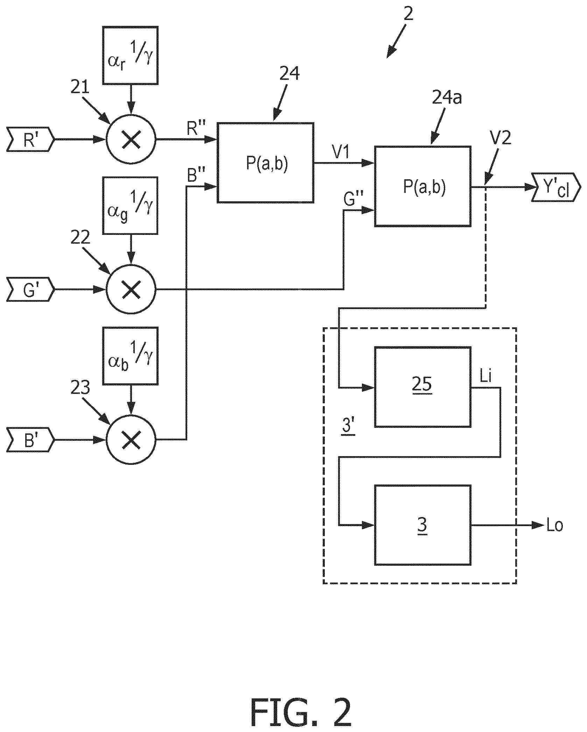

This luminance mapping function defines the mapping between different gradings, in this example the mapping from HDR to SDR reference grading (the latter in Fig. 2 being the LDR image Im_LDR to be communicated to receivers.

One should not confuse color mappings of color transformer 202 with anything that was applied to the raw camera feed to obtain the master HDR video, which is here already assumed to be input, since this color transformation is for obtaining the image to be communicated, and simultaneously the re-grading desiderata, as technically formulated in the luminance mapping function F_L (data-compressed via e.g. an MPEG or other video compression algorithm or not).

For an exemplary LDR-communicating type (i.e. LDR communication mode), the master HDR image is input to color transformer 202 which is configured to apply the F_L luminance mapping to the luminances of the master HDR image (MAST_HDR), to obtain all corresponding luminances written into output image Im_SDR. Let's assume for elucidation the shape of this function is tweaked per shot of images of a similar scene of a movie by a human color grader, by using color grading software. The applied functions F_ct (i.e. at least F_L) are written in (dynamic, handling) metadata to be co-communicated with the encoded images Im_COD. In this example the video compressor 203 is an MPEG HEVC encoder, but various alternative compression technologies would be suitable, like VVC, or AV1, and the like. In this example, the video compressor 203 forms part of video encoder 221 (which in turn may be comprised in various forms of video creation apparatuses or systems).

In the embodiment shown, the compressed image Im_COD is transmitted to at least one receiver over some image communication medium 205 (e.g. a satellite or cable or internet transmission, e.g. according to ATSC 3.0, or DVB, etc. The HDR video signal may also be communicated e.g. over a cable between two video handling apparatuses).

Typically before communication some further transformation may be done by transmission formatter 204, which may apply depending on the system such techniques as e.g. packetization, modulation, transmission protocol control, etc. This will typically apply integrated circuits.

At any receiving site, a corresponding video signal unformatter 206 applies the necessary unformatting methods to re-obtain the compressed video as a set of e.g. compressed HEVC images (i.e. HEVC image data), e.g. demodulation etc.

Video decompressor 207 does the e.g. HEVC decompression, to obtain a stream of pixelated uncompressed images Im_RLDR, which in the present example are SDR images, but in the other mode would be HDR images. The video decompressor will also unpack the necessary luminance mapping function F_L from the e.g. SEI messages, or in general color transformation functions F_ct.

The images and functions are input to a (decoder) color transformer 208 which is arranged to transform the LDR image to an image having different dynamic range. In the embodiment shown, the color transformer 208 is configured to transform the LDR image to an image having a higher dynamic range (i.e. of PL_V higher than 100 nit, and typically at least a few times higher, e.g. 5x). This results in a reconstructed HDR image Im_RHDR. E.g. a 3000 nit reconstructed HDR image Im_RHDR may be reconstructed as close approximation of the master HDR image (MAST_HDR) by applying the inverse color transformations IF_ct of the color transformations F_ct used at the encoding side to make the Im_LDR from the MAST_HDR. This image can then be sent e.g. to a display 210 for further display adaptation, but the making of a display adapted image can also happen in one go, during the decoding, by using in the color transformer an FL_DA function (determined in an offline loop, e.g. in firmware) instead of the F_L function. So the color transformer may also comprise a display adaptation unit 209, to derive the FL_DA function.

The optimized e.g. 3000 nit display adapted image Im3000nit may be sent e.g. to a display 210 if the video decoder 220 is comprised e.g. in a settopbox or computer etc., or it may be sent to a display panel in case the decoder resides in e.g. a mobile phone, or it may be communicated to a movie theatre projector if the decoder resides in e.g. some internet-connected server, etc.

FIG. 2 schematically shows an embodiment of an improved image processing apparatus 1 according to the present invention that is provided to compute an output luminance of an output image with an output dynamic range from an input color specified by non-linear color components in an input dynamic range with a modest computational effort. The computed output luminance is a reasonably accurate approximation of the actual luminance corresponding to the input color taking into account the transformation from the input dynamic range to the output dynamic range.

The improved image processing apparatus shown in FIG. 2 comprises a luminance calculation circuit 2 to calculate an input luminance Li from non-linear color components R', G', B' in the image data Im_RLDR that specify an input color and a luminance mapper 3 to apply a luminance mapping function to the input luminance Li to obtain an output luminance Lo.

The luminance calculation circuit 2 is configured to compute an output value as a function P(a,b) of a first input value (a) and a second input value (b) at respective inputs. The function P(a,b) selects one of the first input value and the second input value that is greater than or equal to the other one of said first input value and said second input value as a primary value and it selects the other one of the first input value and the second input value as a secondary value. In a special case that the first and the second input value are equal it is not relevant, which one is selected as the primary value, and which as the secondary value. In order to avoid a deadlock situation the selection can be performed as follows. Select always the first input value (a) as the primary value, unless the first input value is less than the second input value. In the latter case the second input value is selected as the primary value. Alternatively, the selection can be performed as select always the second input value (b) as the primary value, unless the second input value is less than the first input value. In the latter case the first input value is selected as the primary value. A still further alternative approach is to randomly select one of the first and the second input value as the primary value in case they are equal. In any case, the one of the input values that is not selected as the primary value is selected as the secondary value.

When it is determined which of the input values is the primary value and which is the secondary value the function P computes the output value as a linear weighting of the primary value and the secondary value if the primary value is less than a product of the secondary value with a constant, and determines the primary value as the output value otherwise.

As shown in FIG. 2, the luminance calculation circuit 2 applies the function P first to compute a first intermediary output value V1 with a first one R" and a second one B" of a set of intermediate color components R", G",B" at its respective inputs. Subsequently, it applies the function P to compute a second intermediate value V2 from the first intermediate output value V1 and a third one G" of the set of intermediary color components at its respective inputs. Which of the red, green and blue components acts as first, second or third input in our approximation doesn't matter a lot. But there is a slight preference to first combine red and blue, which have the smaller coefficients in the luma mix equation. In the example shown, the luminance calculation circuit 2 has a first and a second computation block 24, 24a to compute the first intermediary output value V1 and the second intermediary output value V2.

The luminance calculation circuit 2 may comprise a (optional) luma to luminance mapping circuit 25 with which is configured to obtain the input luminance Li as a power y of the second intermediate value V2. V2 is a constant luminance luma output. Usually luma does not represent luminance accurately for all colors, except on the achromatic axis of greys. Due to the non-linearity there is some reduction of the luma as calculated by applying the three weight coefficients to the non-linear (i.e. gamma or power function power(x;gamma)) coefficients, or first linearizing the three color components, then calculating the luminance in the linear domain, and then calculating the luma again on a single dimension being the luminance. The latter one is a luma coding which is an exact representation of the luminance of any color, irrespective of whether that color is saturated blue etc., and that version of the luma is called "constant luminance luma", and what we have as output V2.

The luminance mapper 3 applies a luminance mapping function to an input luminance Li to obtain an output luminance Lo. So for this a circuit will be incorporated which converts the constant luminance luma to the input luminance for the luminance mapper, which is luma to luminance mapping circuit 25. The luma to luminance mapping circuit 25 is an optional component of the luminance calculation circuit 2.

Some embodiments may want to do the luminance processing actually in the corresponding luma domain, in which case luminance mapper 3 will work in the luma domain, on inputs being the intermediate value V2, and circuit 25 will not be present.

In general the luminance processing in e.g. a dynamic range change, in e.g. a television which changes its input images to a different dynamic range, or a video coder which codes master videos as to be communicated videos of a different dynamic range, will use what we have drawn as luminance mapper circuit 3' (with or without circuit 25). Procesing in the luma domain needs less bits for the data words representing the pixel luminances (e.g. 14 bits instead of 28).

In an embodiment, the power with which the second intermediate value is raised to obtain the input luminance is a square power and the respective weights are the square roots of the respective constants of the luminance equation for the primary video coding system. This is of particular application for the Rec. 709 video coding convention.

As shown in FIG. 2, the intermediate color components R", G",B" are respective weighted values of the non-linear input color components R', G', B'. That is, the non-linear input color components R', G', B' are multiplied 21, 22, 23 by respective weights that are characteristic for a primary video coding system 221 from which the non-linear input color components R', G', B' are received.

For clarity, the various elements 21, 22, 23, 24, 24a, 25 and 3 are shown as separate computation blocks. Such an embodiment is also favorable to optimize computation speed. This is rendered possible, in that the computations can be performed in a pipelined process, wherein the luminance mapper 3 applies its luminance mapping function to the input luminance Li to obtain an output luminance Lo of a pixel k, wherein the luma to luminance mapping circuit 25 yields the input luminance Li as a power y of the second intermediate value V2 for a subsequent pixel k+1, wherein the second computation block 24a computes the second intermediary output value V2 for a further subsequent pixel k+2, wherein the first computation block 24 computes the first intermediary output value V1 for a further subsequent pixel k+3, and wherein the elements 21, 22, 23 perform the multiplications to weight the non-linear input color components R', G', B'.

If a very high computation speed is required, these computation blocks can be implemented as dedicated hardware. Alternatively one or more or all computation blocks can be implemented as by software executed on a programmable processor, e.g. a CPU or a GPU.

In the embodiment shown in FIG. 2, the first computation block 24 computes the first intermediary output value V1 from the intermediate color components R" and B" and subsequently, the second computation block 24a computes the second intermediate value V2 from the first intermediate output value V1 and intermediary color component G" at its respective inputs. Also another implementation is suitable, wherein the inputs for the first computation block 24 are the intermediary color components R" and G" and the second computation block 24a receives the intermediary color component B" as an input. In a still further implementation the inputs for the first computation block 24 are the intermediary color components B" and G" and the second computation block 24a receives the intermediary color component R" as an input. Nevertheless, the implementation shown in FIG 2 is relatively accurate as compared to these alternatives. This is because typically, the green color component provides a dominating contribution to the luminance. By selecting the green color component as the third intermediate color component, an approximation error is introduced in only one stage of the luminance calculation circuit.

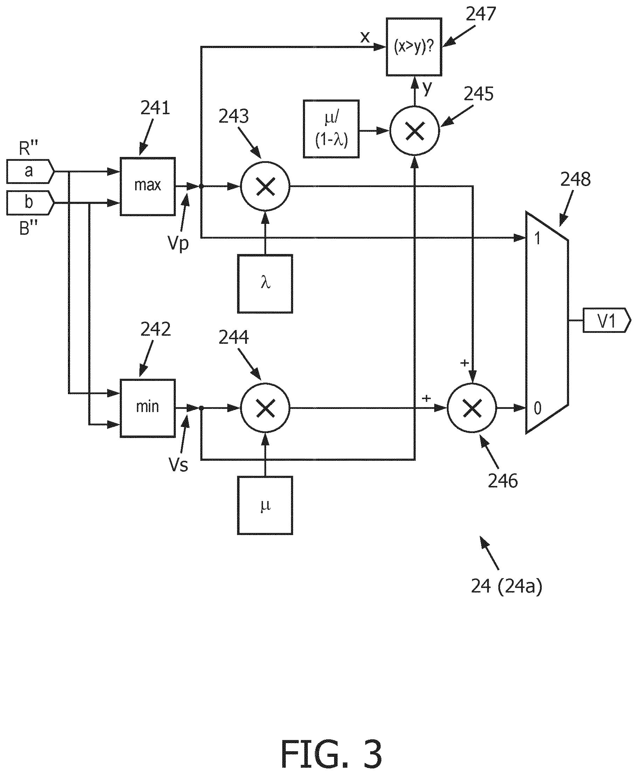

FIG. 3 shows an exemplary embodiment of a computation block to perform the function P. In this computation block 24, computation elements 241, 242 respectively output the primary value Vp and the secondary value Vs. The multiplication elements 243, 244 respectively multiply the primary value Vp with a primary weight $\lambda$ and the secondary value Vs with a secondary weight $\mu$. A summation element 246 computes the sum of the weighted primary value and the weighted secondary value. This weighted sum is provided at a first input of a multiplexer 248. The primary value Vp is provided at a second input of the multiplexer 248. The multiplexer 248 is controlled by the output of a comparator 247. The latter compares the primary value Vp with the product of the secondary value Vs and a constant. The constant is equal to the value of the secondary weight $\mu$ divided by one minus the primary weight $\lambda$. If the primary value Vp exceeds the value of the product, the multiplexer selects the primary value Vp as and otherwise it selects the weighted sum.

In the Rec. 709 video coding convention, the non-linear color components R', G', B' are the square root of the input color components R,G, B. The mathematically correct value for the input luminance Y is:

$$Y = \alpha_r R + \alpha_g G + \alpha_b B \qquad \qquad [\text{Eq. 3}]$$

Hence the square root of the luminance equals:

$$\sqrt{Y} = \sqrt{(\sqrt{\alpha_r}\sqrt{R})^2 + \left(\sqrt{\alpha_g}\sqrt{G}\right)^2 + \left(\sqrt{\alpha_b}\sqrt{B}\right)^2} \qquad \qquad [\text{Eq. 4}]$$

The inventor found that the value $\sqrt{Y}$ can approximated with modest computational effort with a two-step application of the function P specified above.

The approximation can be written as:

$$\sqrt{Y} \approx P\left(P\left(\sqrt{\alpha_r}\sqrt{R}, \sqrt{\alpha_g}\sqrt{G}\right), \sqrt{\alpha_b}\sqrt{B}\right) \qquad [\text{Eq. 5a}]$$

Or alternatively

$$\sqrt{Y} \approx P\left(P\left(\sqrt{\alpha_r}\sqrt{R}, \sqrt{\alpha_b}\sqrt{B}\right), \sqrt{\alpha_g}\sqrt{G}\right) \qquad [\text{Eq. 5b}]$$

Or

$$\sqrt{Y} \approx P\left(P\left(\sqrt{\alpha_g}\sqrt{G}, \sqrt{\alpha_b}\sqrt{B}\right), \sqrt{\alpha_r}\sqrt{R}\right) \qquad [\text{Eq. 5c}]$$

As pointed out above, Eq. 5b gives the best approximation, because of the dominant effect of the color green on the luminance.

Statistical experiments performed by the inventor further indicate that a bias free estimation of the value $\sqrt{Y}$ is obtained when the primary weight and the secondary weight used for computing the weighted sum in the execution of the function P approximately are 0.8945 and 0.4944 respectively.

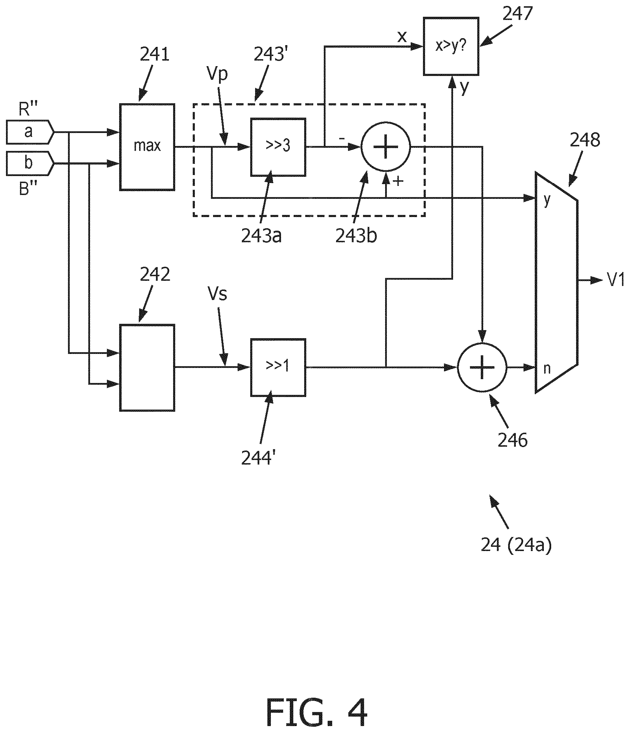

Nevertheless a still very acceptable approximation of the value $\sqrt{Y}$ is obtained if the primary weight is 7/8 and the secondary weight is 1/2. Therewith a near optimal approximation can be obtained with a simple implementation of the multiplications by addition and shift operations as illustrated in FIG. 4. Parts therein corresponding to FIG. 3 have the same reference. It can be seen in FIG. 4 that the multiplication elements 243' and 244' replace the multiplication elements 243 and 244 of FIG. 3. The multiplication element 243' performs a binary shift right by 3 operation in block 243a, which is equivalent to a division of the primary value Vp by 8, and subtracts the value so obtained from the primary value Vp in block 243b, therewith obtaining the value 7/8 Vp. The multiplication element 244' performs a binary shift right by 1 operation, therewith providing the value Vs/2. The comparator 247 compares the value x = Vp/8 with the value y = Vs/2 to determine the control signal for the multiplexer. As is apparent from FIG. 4 and its description, the computational requirements for this embodiment are very modest.

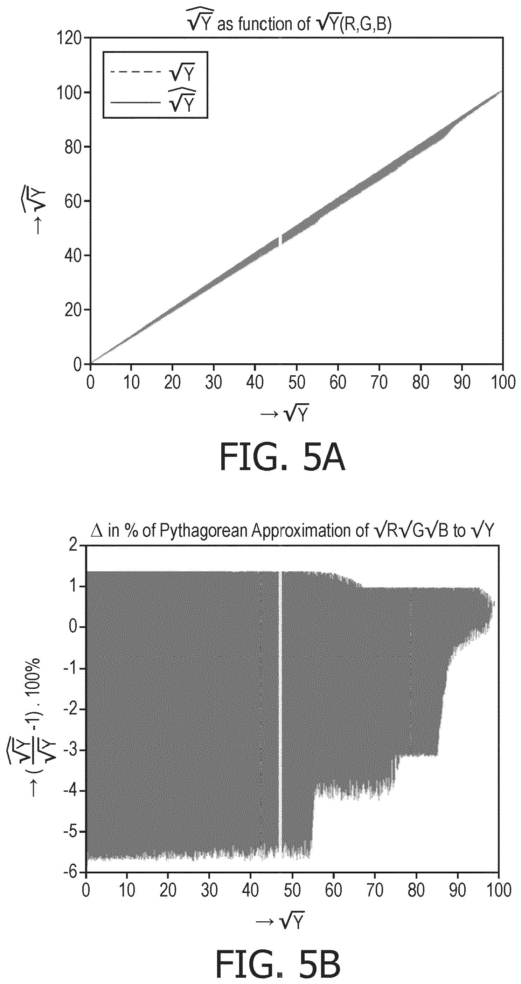

FIG. 5A compares the value $\widehat{\sqrt{Y}}$ that is estimated with the circuit 2 using an implementation of the function P with the values 7/8 and 1/2 as the primary weight and the secondary weight respectively, with the mathematically correct value $\sqrt{Y}$ for $10^7$ random samples possible values of R", G" and B".

FIG. 5B shows the relative deviation between the estimated value and the mathematically correct value.

As confirmed by FIG. 5A, 5B, the estimated value reasonably well approximates the mathematically correct value, although a small bias can be seen particularly for intermediate values of $\sqrt{Y}$.

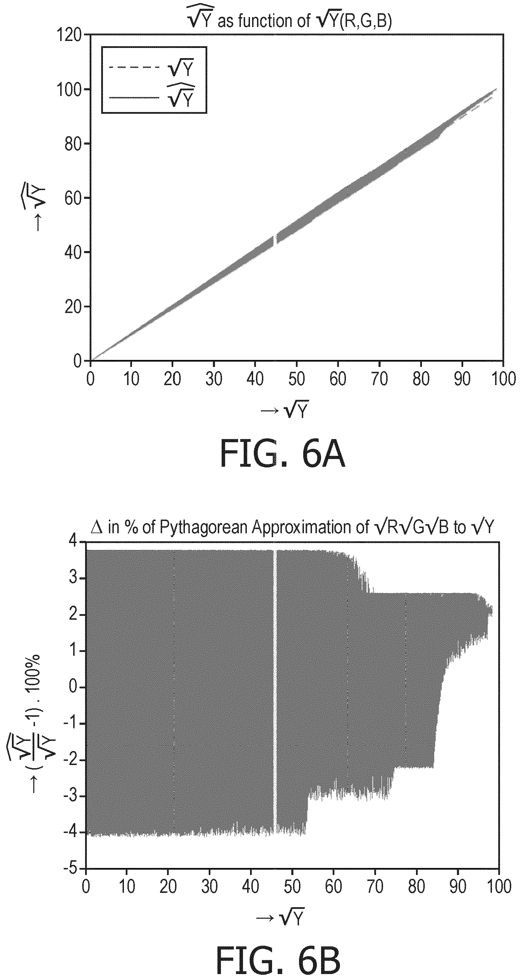

FIG. 6A compares the value $\widehat{\sqrt{Y}}$ that is estimated with the circuit 2 using another implementation of the function P. In this implementation the primary weight $\lambda$ and the secondary weight $\mu$ are chosen as follows:

$$\lambda = 0.89457$$

$$\mu = 0.4944$$

As is visible from FIG. 6A, 6B the estimation in this case is bias free and with a maximum relative error of about 4%.

Whereas the invention was explained above with respect to a special case wherein y=2, the inventor has found that the invention is more generally applicable to non-linear encodings for any y in a broad range (e.g. gamma values between 2 and 3 are useful for image coding), by a proper selection of the primary weight and the secondary weight as shown in the table below for exemplary values of Gamma.

| Gamma | Lambda | mu |
|---|---|---|
| 1.8000 | 0.9180 | 0.5180 |

(continued)

| Gamma | Lambda | mu |
|---|---|---|
| 1.9000 | 0.9048 | 0.5048 |
| 2.0000 | 0.8945 | 0.4944 |
| 2.1000 | 0.8850 | 0.4850 |
| 2.2000 | 0.8763 | 0.4763 |
| 2.3000 | 0.8683 | 0.4683 |
| 2.4000 | 0.8610 | 0.4610 |
| 2.5000 | 0.8543 | 0.4543 |
| 2.6000 | 0.8481 | 0.4481 |
| 2.7000 | 0.8423 | 0.4423 |
| 2.8000 | 0.8369 | 0.4369 |
| 2.9000 | 0.8319 | 0.4319 |
| 3.0000 | 0.8273 | 0.4273 |

With this selection of the primary weight and the secondary weight as a function of gamma, the mathematically correct luma ( $Y^{1/\gamma}$ ) can be estimated bias free with an accuracy of about $\pm$ 4%.

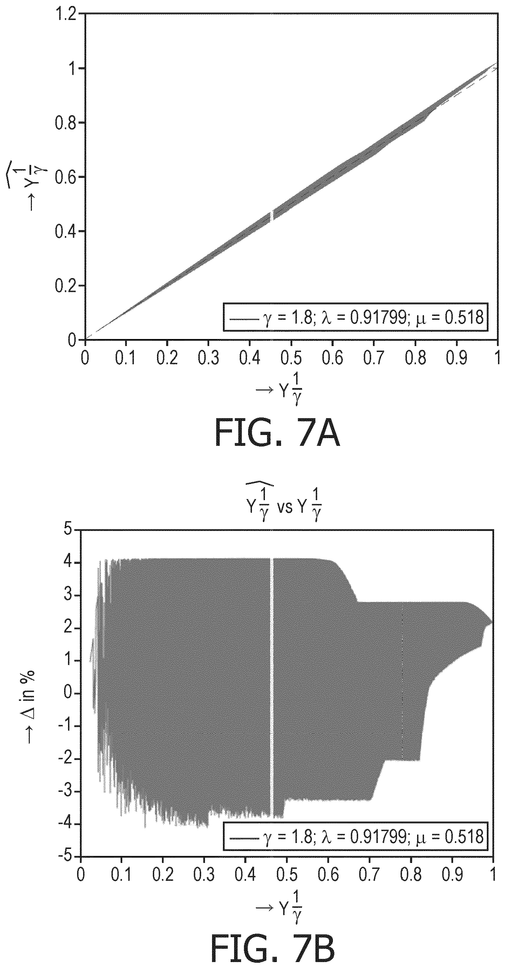

By way of example, this is illustrated in FIG. 7A, 7B for $\gamma$= 1.8000 using the approximation with $\lambda$= 0.9180 and $\mu$= 0.5180.

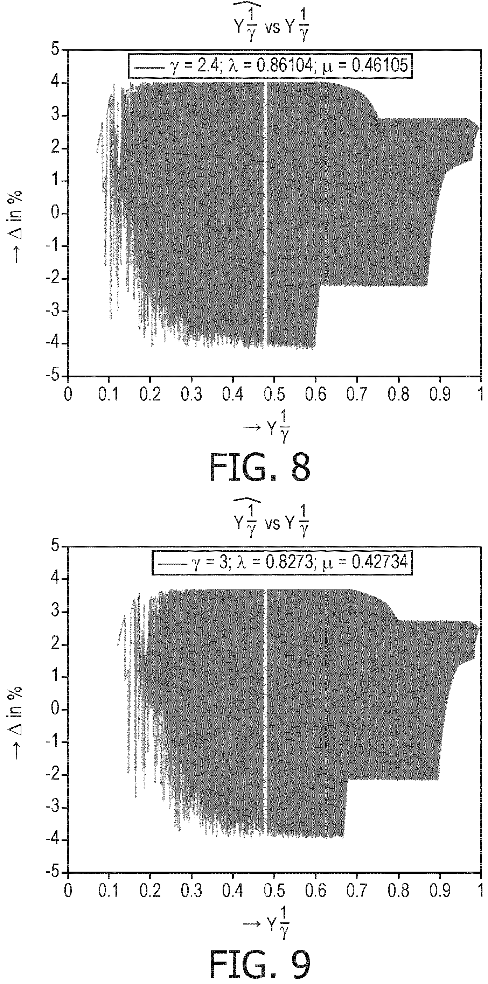

FIG. 8 and FIG. 9 respectively illustrate the accuracy of the approximation for $\gamma$=2.4 with $\lambda$=0.8610 and $\mu$= 0.4610 and for $\gamma$=3.0000 with the values $\lambda$=0.8273 and $\mu$=0.4273.

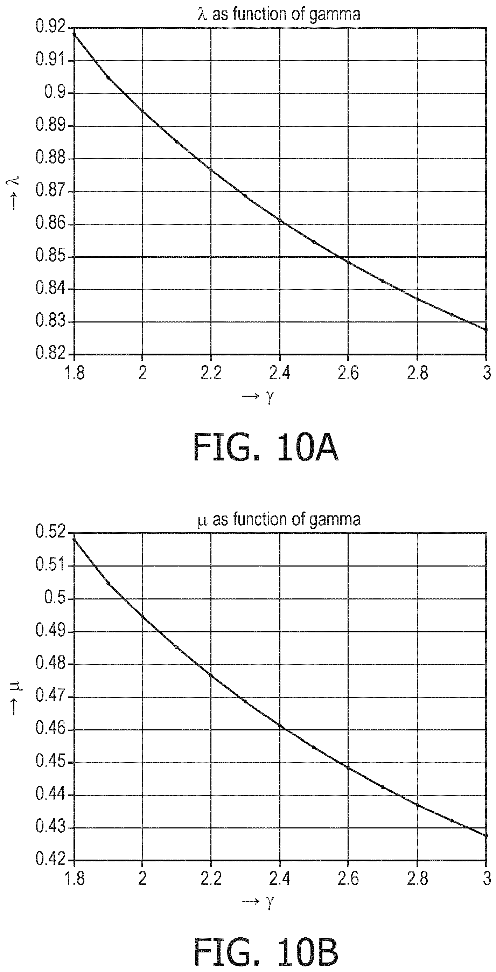

Suitable values of the primary weights and the secondary weights that are not explicitly displayed in the table above can be found by interpolation, as illustrated in FIG. 10A, 10B. Therein FIG. 10A and 10B respectively show the value for the primary weight $\lambda$ and the value for the secondary weight $\mu$ to be selected as a function of gamma.

The algorithmic components disclosed in this text may (entirely or in part) be realized in practice as hardware (e.g. parts of an application specific IC) or as software running on a special digital signal processor, or a generic processor, etc. They may be semi-automatic in a sense that at least some user input may be/have been (e.g. in factory, or consumer input, or other human input) present.

It should be understandable to the skilled person from our presentation which components may be optional improvements and can be realized in combination with other components, and how (optional) steps of methods correspond to respective means of apparatuses, and vice versa. The fact that some components are disclosed in the invention in a certain relationship (e.g. in a single figure in a certain configuration) doesn't mean that other configurations are not possible as embodiments under the same inventive thinking as disclosed for patenting herein. Also, the fact that for pragmatic reasons only a limited spectrum of examples has been described, doesn't mean that other variants cannot fall under the scope of the claims. In fact, the components of the invention can be embodied in different variants along any use chain, e.g. all variants of a creation side like an encoder may be similar as or correspond to corresponding apparatuses at a consumption side of a decomposed system, e.g. a decoder and vice versa. Several components of the embodiments may be encoded as specific signal data in a signal for transmission, or further use such as coordination, in any transmission technology between encoder and decoder, etc. The word "apparatus" in this application is used in its broadest sense, namely a group of means allowing the realization of a particular objective, and can hence e.g. be (a small part of) an IC, or a dedicated appliance (such as an appliance with a display), or part of a networked system, etc. "Arrangement" or "system" is also intended to be used in the broadest sense, so it may comprise inter alia a single physical, purchasable apparatus, a part of an apparatus, a collection of (parts of) cooperating apparatuses, etc.

The computer program product denotation should be understood to encompass any physical realization of a collection of commands enabling a generic or special purpose processor, after a series of loading steps (which may include intermediate conversion steps, such as translation to an intermediate language, and a final processor language) to enter the commands into the processor, to execute any of the characteristic functions of an invention. In particular, the computer program product may be realized as data on a carrier such as e.g. a disk or tape, data present in a memory, data traveling via a network connection -wired or wireless- , or program code on paper. Apart from program code, characteristic data required for the program may also be embodied as a computer program product. Such data may be (partially) supplied in any way.

The invention or any data usable according to any approach of the present embodiments like video data, may also be embodied as signals on data carriers, which may be removable memories like optical disks, flash memories, removable hard disks, portable devices writeable via wireless means, etc.

Some of the steps required for the operation of any presented method may be already present in the functionality of the processor or any apparatus embodiments of the invention instead of described in the computer program product or any unit, apparatus or method described herein (with specifics of the invention embodiments), such as data input and output steps, well-known typically incorporated processing steps such as standard display driving, etc. It should be noted that the above-mentioned embodiments illustrate rather than limit the invention. Where the skilled person can easily realize a mapping of the presented examples to other regions of the claims, we have for conciseness not mentioned all these options in-depth. Apart from combinations of elements of the invention as combined in the claims, other combinations of the elements are possible. Any combination of elements can be realized in a single dedicated element.

Any reference sign between parentheses in the claim is not intended for limiting the claim, nor is any particular symbol in the drawings. The word "comprising" does not exclude the presence of elements or aspects not listed in a claim. The word "a" or "an" preceding an element does not exclude the presence of a plurality of such elements.

**Claims**

1. Image processing apparatus (1) to obtain an output luminance (Lo) from non-linear color components (R', G', B') that specify an input color, the image processing apparatus comprising:

   a luminance calculation circuit (2) and
   a luminance mapper (3) or luma mapper ,
   the luminance calculation circuit (2) configured to compute an output value as a function P of a first input value and a second input value at respective inputs,
   which function:

   selects one of said first input value and said second input value that is greater than or equal to the other one of said first input value and said second input value as a primary value;
   selects the other one of said first input value and said second input value as a secondary value;
   computes the output value as a linear weighting of the primary value and the secondary value if the primary value is less than a product of the secondary value with a constant, and determines the primary value as the output value otherwise,

   the luminance calculation circuit (2) being configured to:

   apply the function P to compute a first intermediary output value (V1) with a first one (R") and a second one (B") of a set of intermediate color components (R", G",B") at its respective inputs; and
   subsequently apply the function P to compute a second intermediate value (V2) with the first intermediate output value (V1) and a third one (G") of the set of intermediary color components at its respective inputs, and

   the image processing apparatus being configured to obtain an input luminance (Li) as a power of the second intermediate value (V2), and the luminance mapper (3) being configured to apply a luminance mapping function to the input luminance (Li) to obtain an output luminance (Lo), or a luma mapper being configured to apply a luma function to the second intermediate value,
   the intermediate color components (R", G",B") being respective weighted values of the non-linear input color components (R', G', B') multiplied by respective weights that are characteristic for a primary video coding system.

2. The image processing apparatus according to claim 1, wherein the power with which the second intermediate value is raised to obtain the input luminance is a square power and wherein the respective weights are the square roots of the respective constants ($\alpha_r$, $\alpha_g$, $\alpha_b$) of the luminance equation for the primary video coding system.

3. Image processing apparatus (1) according to claim 1 or 2, wherein the third one (G") of the set of intermediary color components is the weighted value of the non-linear input color component for the green color component.

4. The image processing apparatus according to claim 1, 2 or 3, wherein the linear weighting used for computing the first intermediary output value (V1) and/or the second intermediary output value (V2) comprises weighting the primary value with a primary weight and weighting the secondary value with a secondary weight, wherein the constant is equal to the value of the secondary weight divided by one minus the primary weight.

5. The image processing apparatus according to claim 4, wherein the primary weight is 7/8 and the secondary weight is 1/2.

6. The image processing apparatus according to claim 4, wherein the primary weight is approximately 0.8945 and the secondary weight is approximately 0.4944.

7. A dynamic range conversion apparatus to convert an input image with a first maximum luminance into an output image with a second maximum luminance different from the first maximum luminance, the dynamic range conversion apparatus comprising an image processing apparatus according to any of claims 1 to 6, to obtain an output luminance (Lo) of pixels of the output image from non-linear color components (R', G', B') of respective pixels of the input image.

8. The dynamic range conversion apparatus according to claim 7, wherein the second maximum luminance is greater than the first maximum luminance.

9. The dynamic range conversion apparatus according to claim 7, wherein the second maximum luminance is less than the first maximum luminance.

10. Image processing method comprising:

calculating an input luminance from non-linear color components (R', G', B') that specify an input color; and after having done such calculation of the input luminance, applying a luminance mapping function to the input luminance to obtain an output luminance, or a corresponding luma mapping function to a luma coding obtained from the input luminance, wherein calculating the input luminance comprises:

computing an output value as a function P of a first input value and a second input value at respective inputs, which function:

selects one of said first input value and said second input value that is greater than or equal to the other one of said first input value and said second input value as a primary value; selects the other one of said first input value and said second input value as a secondary value, computes the output value as a linear weighting of the primary value and the secondary value if the primary value is less than a product of the secondary value with a constant, and determines the primary value as the output value otherwise,

calculating the input luminance comprising:

applying the function P to compute a first intermediary output value (V1) with a first one (R") and a second one (B") of a set of intermediate color components (R", G",B") at its respective inputs; and subsequently applying the function P to compute a second intermediate value (V2) with the first intermediate output value (V1) and a third one (G") of the set of intermediary color components at its respective inputs, and

calculating the input luminance further comprising obtaining the input luminance (Li) as a power of the second intermediate value (V2), the intermediate color components (R", G",B") being respective weighted values of the non-linear input color components (R', G', B') multiplied by respective weights that are characteristic for a primary video coding system.

11. The method according to claim 10, wherein the non-linear color components (R', G', B') are obtained from an input image which has a first maximum luminance and the output luminance (Lo) is provided for an output image which has a second maximum luminance different from the first maximum luminance.

12. A video decoder (220) arranged to receive a high dynamic range video signal comprising a set of input images, which comprise pixels which have pixel colors which are defined by three additive color components which are specified as non-linear red, green and blue color components defined according to an opto-electrical or electro-optical transfer function, or a 3x3 matrixed version of the non-linear red, green and blue color components such as a Y'CbCr color representation, and arranged to obtain a luminance mapping function (F_ct), e.g. from an internal memory or extracted from received metadata in the video signal, the decoder being arranged to apply said luminance mapping function to said pixel colors to obtain corresponding pixel luminances of output colors of respective decoded images corresponding to the input images, wherein the video decoder comprises an image processing apparatus (1) according to any of the above image processing apparatus claims 1 - 9 to effectuate such luminance mapping for decoding.

13. A video encoder (220) arranged to receive an original set of high dynamic range video images, which comprise pixels which have pixel colors which are defined by three additive color components which are specified as non-linear red, green and blue color components defined according to an opto-electrical or electro-optical transfer function, or a 3x3 matrixed version of the non-linear red, green and blue color components such as a Y'CbCr color representation, and arranged to obtain a luminance mapping function (F_ct), e.g. from an internal memory or extracted from received metadata, the encoder being arranged to apply said luminance mapping function to said pixel colors to obtain corresponding pixel luminances of output colors of respective output images corresponding to the input images, wherein the video decoder comprises an image processing apparatus (1) according to any of the above image processing apparatus claims 1-9, and a formatting unit connected to a video communication channel to delivered a formatted version of the output images.

14. A video communication system comprising a video encoder (221) for encoding input video data (MAST_HDR) from a video source (ImSRC) into a compressed or uncompressed video signal (Im_COD), a transmission channel (204, 205, 206) for transmitting the compressed video signal, and a video decoder (220) for decoding the transmitted video signal into a reconstructed video signal (Im_RHDR), wherein the video decoder (220) comprises an image processing apparatus as claimed in any of the image processing apparatus claims 1-9.

15. A video communication method comprising:

receiving input video data (MAST_**HDR)** from a video source (ImSRC);
encoding the input video data into a compressed video signal (Im_COD);
transmitting the compressed video signal;
receiving the compressed video signal;
decoding the compressed video signal into a reconstructed video signal, said decoding comprising obtaining non-linear color components (R', G', B') from an input image represented by the compressed video signal and providing by using the method of claim 10 an output luminance (Lo) for an output image, wherein the input image has a first maximum luminance and the output image has a second maximum luminance different from the first maximum luminance.

**Patentansprüche**

1. Bildverarbeitungseinrichtung (1) zum Erhalten einer Ausgangsluminanz (Lo) aus nichtlinearen Farbkomponenten (R', G', B'), die eine Eingangsfarbe spezifizieren, wobei die Bildverarbeitungseinrichtung umfasst:

eine Luminanzberechnungsschaltung (2) und
einen Luminanzmapper (3) oder Lumamapper,
wobei die Luminanzberechnungsschaltung (2) so konfiguriert ist, dass sie einen Ausgangswert als Funktion P eines ersten Eingangswerts und eines zweiten Eingangswerts an jeweiligen Eingängen berechnet,
wobei die Funktion:

einen aus dem ersten Eingangswert und dem zweiten Eingangswert, der größer oder gleich dem anderen von dem ersten Eingangswert und dem zweiten Eingangswert ist, als primären Wert auswählt;
den jeweils anderen aus dem ersten Eingangswert und dem zweiten Eingangswert als sekundären Wert auswählt;
den Ausgangswert als lineare Gewichtung des primären Werts und des sekundären Werts berechnet, wenn der primäre Wert kleiner ist als das Produkt des sekundären Werts mit einer Konstanten, und andernfalls den primären Wert als Ausgangswert bestimmt,

die Luminanzberechnungsschaltung (2) konfiguriert ist zum:

Anwenden der Funktion P, um einen ersten Zwischenausgangswert (V1) mit einer ersten (R") und einer zweiten (B") einer Menge von Zwischenfarbkomponenten (R", G", B") an ihren jeweiligen Eingängen zu berechnen; und
anschließenden Anwenden der Funktion P, um einen zweiten Zwischenwert (V2) mit dem ersten Zwischenausgangswert (V1) und einem dritten (G") der Menge von Zwischenfarbkomponenten an ihren jeweiligen Eingängen zu berechnen, und

wobei die Bildverarbeitungseinrichtung so konfiguriert ist, dass sie eine Eingangsluminanz (Li) als Potenz des zweiten Zwischenwerts (V2) erhält, und der Luminanzmapper (3) so konfiguriert ist, dass er eine Luminanzabbildungsfunktion auf die Eingangsluminanz (Li) anwendet, um eine Ausgangsluminanz (Lo) zu erhalten, oder ein Lumamapper so konfiguriert ist, dass er eine Luma-Funktion auf den zweiten Zwischenwert anwendet, wobei die Zwischenfarbkomponenten (R", G", B") jeweils gewichtete Werte der nichtlinearen Eingangsfarbkomponenten (R', G', B') sind, die mit jeweiligen Gewichten multipliziert werden, die für ein primäres Videocodierungssystem charakteristisch sind.

2. Bildverarbeitungseinrichtung nach Anspruch 1, wobei die Potenz, mit der der zweite Zwischenwert potenziert wird, um die Eingangsluminanz zu erhalten, eine Quadratpotenz ist und wobei die jeweiligen Gewichte die Quadratwurzeln der jeweiligen Konstanten ($\alpha_r$, $\alpha_g$, $\alpha_b$) der Luminanzgleichung für das primäre Videocodierungssystem sind.

3. Bildverarbeitungseinrichtung (1) nach Anspruch 1 oder 2, wobei die dritte (G") der Menge von Zwischenfarbkomponenten der gewichtete Wert der nichtlinearen Eingangsfarbkomponente für die grüne Farbkomponente ist.

4. Bildverarbeitungseinrichtung nach Anspruch 1, 2 oder 3, wobei die lineare Gewichtung, die zur Berechnung des ersten Zwischenausgangswertes (V1) und/oder des zweiten Zwischenausgangswerts (V2) verwendet wird, Gewichtung des primären Werts mit einem primären Gewicht und Gewichtung des sekundären Werts mit einem sekundären Gewicht umfasst, wobei die Konstante gleich dem Wert des sekundären Gewichts geteilt durch eins minus dem primären Gewicht ist.

5. Bildverarbeitungseinrichtung nach Anspruch 4, wobei das primäre Gewicht 7/8 beträgt und das sekundäre Gewicht 1/2 beträgt.

6. Bildverarbeitungseinrichtung nach Anspruch 4, wobei das primäre Gewicht etwa 0,8945 beträgt und das sekundäre Gewicht etwa 0,4944 beträgt.

7. Einrichtung zur Dynamikbereichsumwandlung, um ein Eingangsbild mit einer ersten maximalen Luminanz in ein Ausgangsbild mit einer zweiten maximalen Luminanz umzuwandeln, die sich von der ersten maximalen Luminanz unterscheidet, wobei die Einrichtung zur Dynamikbereichsumwandlung eine Bildverarbeitungseinrichtung nach einem der Ansprüche 1 bis 6 umfasst, um eine Ausgangsluminanz (Lo) von Pixeln des Ausgangsbildes aus nichtlinearen Farbkomponenten (R', G', B') von jeweiligen Pixeln des Eingangsbildes zu erhalten.

8. Einrichtung zur Dynamikbereichsumwandlung nach Anspruch 7, wobei die zweite maximale Luminanz größer als die erste maximale Luminanz ist.

9. Einrichtung zur Dynamikbereichsumwandlung nach Anspruch 7, wobei die zweite maximale Luminanz kleiner als die erste maximale Luminanz ist.

10. Bildverarbeitungsverfahren, umfassend:

Berechnen einer Eingangsluminanz aus nichtlinearen Farbkomponenten (R', G', B'), die eine Eingangsfarbe spezifizieren; und
nach der Berechnung der Eingangsluminanz, Anwenden einer Luminanzabbildungsfunktion auf die Eingangsluminanz, um eine Ausgangsluminanz zu erhalten, oder einer entsprechenden Luma-Abbildungsfunktion auf eine aus der Eingangsluminanz erhaltenen Luma-Codierung,
wobei das Berechnen der Eingangsluminanz umfasst:

Berechnen eines Ausgangswerts als Funktion P eines ersten Eingangswerts und eines zweiten Eingangswerts an jeweiligen Eingängen,
wobei die Funktion:

einen aus dem ersten Eingangswert und dem zweiten Eingangswert, der größer oder gleich dem anderen von dem ersten Eingangswert und dem zweiten Eingangswert ist, als primären Wert auswählt;
den jeweils anderen aus dem ersten Eingangswert und dem zweiten Eingangswert als sekundären Wert auswählt,
den Ausgangswert als lineare Gewichtung des primären Werts und des sekundären Werts berechnet, wenn der primäre Wert kleiner ist als das Produkt des sekundären Werts mit einer Konstanten, und andernfalls den primären Wert als Ausgangswert bestimmt,

Berechnen der Eingangsluminanz umfasst:

Anwenden der Funktion P, um einen ersten Zwischenausgangswert (V1) mit einer ersten (R") und einer zweiten (B") einer Menge von Zwischenfarbkomponenten (R", G", B") an ihren jeweiligen Eingängen zu berechnen; und
anschließendes Anwenden der Funktion P, um einen zweiten Zwischenwert (V2) mit dem ersten Zwischenausgangswert (V1) und einem dritten (G") der Menge von Zwischenfarbkomponenten an ihren jeweiligen Eingängen zu berechnen, und

Berechnen der Eingangsluminanz weiter Erhalten der Eingangsluminanz (Li) als Potenz des zweiten Zwischenwertes (V2) umfasst,
die Zwischenfarbkomponenten (R", G", B") jeweils gewichtete Werte der nichtlinearen Eingangsfarbkomponenten (R', G', B') sind, die mit jeweiligen Gewichten multipliziert werden, die für ein primäres Videocodierungssystem charakteristisch sind.

11. Verfahren nach Anspruch 10, wobei die nichtlinearen Farbkomponenten (R', G', B') aus einem Eingangsbild, das eine erste maximale Luminanz aufweist, erhalten werden und die Ausgangsluminanz (Lo) für ein Ausgangsbild bereitgestellt wird, das eine zweite maximale Luminanz aufweist, die sich von der ersten maximalen Luminanz unterscheidet.

12. Videodecoder (220), der so eingerichtet ist, dass er ein Videosignal mit hohem Dynamikbereich empfängt, das eine Menge von Eingangsbildern umfasst, die Pixel umfassen, die Pixelfarben aufweisen, die durch drei additive Farbkomponenten definiert sind, die als nichtlineare Rot-, Grün- und Blaufarbkomponenten, die gemäß einer optoelektrischen oder elektrooptischen Übertragungsfunktion definiert sind, oder eine 3x3-Matrix der nichtlinearen Rot-, Grün- und Blaufarbkomponenten, wie beispielsweise eine Y'CbCr-Farbdarstellung spezifiziert sind, und eingerichtet, um eine Luminanzabbildungsfunktion (F_ct), z. B. aus einem internen Speicher oder extrahiert aus empfangenen Metadaten im Videosignal, zu erhalten, wobei der Decoder so eingerichtet ist, dass er die Luminanzabbildungsfunktion auf die Pixelfarben anwendet, um entsprechende Pixelluminanzen der Ausgangsfarben jeweiliger decodierter Bilder zu erhalten, die den Eingangsbildern entsprechen, wobei der Videodecoder eine Bildverarbeitungseinrichtung (1) nach einem der oben genannten Ansprüche 1-9 für eine Bildverarbeitungseinrichtung umfasst, um solche Luminanzabbildung für die Decodierung durchzuführen.

13. Videoencoder (220), der so eingerichtet ist, dass er eine ursprüngliche Menge von Videobildern mit hohem Dynamikbereich empfängt, die Pixel umfassen, die Pixelfarben aufweisen, die durch drei additive Farbkomponenten definiert sind, die als nichtlineare Rot-, Grün- und Blaufarbkomponenten spezifiziert sind, die gemäß einer optoelektrischen oder elektrooptischen Übertragungsfunktion definiert sind, oder eine 3x3-Matrixversion der nichtlinearen Rot-, Grün- und Blaufarbkomponenten, wie beispielsweise eine Y'CbCr-Farbdarstellung, und eingerichtet, um eine Luminanzabbildungsfunktion (F_ct), z. B. aus einem internen Speicher oder extrahiert aus empfangenen Metadaten, zu erhalten, wobei der Encoder so eingerichtet ist, dass er die Luminanzabbildungsfunktion auf die Pixelfarben anwendet, um entsprechende Pixelluminanzen der Ausgangsfarben jeweiliger Ausgangsbilder zu erhalten, die den Eingangsbildern entsprechen, wobei der Videodecoder eine Bildverarbeitungseinrichtung (1) nach einem der oben genannten Ansprüche 1-9 für eine Bildverarbeitungseinrichtung und eine Formatierungseinheit umfasst, die mit einem Videokommunikationskanal verbunden ist, um eine formatierte Version der Ausgangsbilder zu liefern.

14. Videokommunikationssystem, umfassend einen Videoencoder (221) zum Codieren von Eingangsvideodaten (MAST_HDR) von einer Videoquelle (ImSRC) in ein komprimiertes oder unkomprimiertes Videosignal (Im_COD), einen Übertragungskanal (204, 205, 206) zum Übertragen des komprimierten Videosignals und einen Videodecoder (220) zum Decodieren des übertragenen Videosignals in ein rekonstruiertes Videosignal (Im_RHDR), wobei der Videodecoder (220) eine Bildverarbeitungseinrichtung nach einem der Ansprüche 1-9 für eine Bildverarbeitungseinrichtung umfasst.

15. Videokommunikationsverfahren, umfassend:

Empfangen von Videoeingangsdaten (MAST_HDR) von einer Videoquelle (ImSRC);
Codieren der Videoeingangsdaten in ein komprimiertes Videosignal (Im_COD);
Übertragen des komprimierten Videosignals;

Empfangen des komprimierten Videosignals;
Decodieren des komprimierten Videosignals in ein rekonstruiertes Videosignal, wobei Decodieren Erhalten von nichtlinearer Farbkomponenten (R', G', B') aus einem durch das komprimierte Videosignal dargestellten Eingangsbild und Bereitstellen einer Ausgangsluminanz (Lo) für ein Ausgangsbild unter Verwendung des Verfahrens nach Anspruch 10 umfasst, wobei das Eingangsbild eine erste maximale Luminanz aufweist und das Ausgangsbild eine zweite maximale Luminanz aufweist, die sich von der ersten maximalen Luminanz unterscheidet.

**Revendications**

1. Appareil de traitement d'images (1) pour obtenir une luminance de sortie (Lo) à partir de composantes de couleur non linéaires (R', G', B') qui spécifient une couleur d'entrée, l'appareil de traitement d'images comprenant :

   un circuit de calcul de luminance (2) et
   un mappeur de luminance (3) ou mappeur de luma,
   le circuit de calcul de luminance (2) étant configuré pour calculer une valeur de sortie en tant que fonction P d'une première valeur d'entrée et d'une deuxième valeur d'entrée aux entrées respectives,
   ladite fonction :

   sélectionne comme valeur principale l'une desdites première valeur d'entrée et deuxième valeur d'entrée qui est supérieure ou égale à l'autre parmi ladite première valeur d'entrée et ladite deuxième valeur d'entrée ;
   sélectionne l'autre valeur entre ladite première valeur d'entrée et ladite deuxième valeur d'entrée comme valeur secondaire ;
   calcule la valeur de sortie comme une pondération linéaire de la valeur principale et de la valeur secondaire si la valeur principale est inférieure à un produit de la valeur secondaire avec une constante, et détermine la valeur principale comme valeur de sortie dans le cas contraire.

   le circuit de calcul de luminance (2) étant configuré pour :

   appliquer la fonction P pour calculer une première valeur de sortie intermédiaire (V1) avec une première (R") et une deuxième (B") d'un ensemble de composantes de couleur intermédiaires (R", G", B") à ses entrées respectives ; et
   appliquer ensuite la fonction P pour calculer une deuxième valeur intermédiaire (V2) avec la première valeur de sortie intermédiaire (V1) et une troisième (G") de l'ensemble des composantes de couleur intermédiaires à ses entrées respectives, et

   l'appareil de traitement d'images étant configuré pour obtenir une luminance d'entrée (Li) comme une puissance de la deuxième valeur intermédiaire (V2), et le mappeur de luminance (3) étant configuré pour appliquer une fonction de mappage de luminance à la luminance d'entrée (Li) pour obtenir une luminance de sortie (Lo), ou un mappeur de luminance étant configuré pour appliquer une fonction de luminance à la deuxième valeur intermédiaire,
   les composantes de couleur intermédiaires (R", G", B") étant des valeurs pondérées respectives des composantes de couleur d'entrée non linéaires (R', G', B') multipliées par des pondérations respectives qui sont caractéristiques d'un système de codage vidéo primaire.

2. Appareil de traitement d'images selon la revendication 1, dans lequel la puissance avec laquelle la deuxième valeur intermédiaire est élevée pour obtenir la luminance d'entrée est une puissance carrée et dans lequel les pondérations respectives sont les racines carrées des constantes respectives ($\alpha_r$, $\alpha_g$, $\alpha_b$) de l'équation de luminance pour le système de codage vidéo primaire.

3. Appareil de traitement d'images (1) selon la revendication 1 ou 2, dans lequel la troisième (G") de l'ensemble des composantes de couleur intermédiaires est la valeur pondérée de la composante de couleur d'entrée non linéaire pour la composante de couleur verte.

4. Appareil de traitement d'images selon la revendication 1, 2 ou 3, dans lequel la pondération linéaire utilisée pour calculer la première valeur de sortie intermédiaire (V1) et/ou la deuxième valeur de sortie intermédiaire (V2) comprend la pondération de la valeur primaire avec une pondération primaire et la pondération de la valeur secondaire avec une pondération secondaire, dans lequel la constante est égale à la valeur de la pondération secondaire divisée par un moins la pondération primaire.

5. Appareil de traitement d'images selon la revendication 4, dans lequel la pondération principale est 7/8 et la pondération secondaire est 1/2.

6. Appareil de traitement d'images selon la revendication 4, dans lequel la pondération primaire est d'environ 0,8945 et la pondération secondaire d'environ 0,4944.

7. Appareil de conversion de plage dynamique pour convertir une image d'entrée avec une première luminance maximale en une image de sortie avec une deuxième luminance maximale différente de la première luminance maximale, l'appareil de conversion de plage dynamique comprenant un appareil de traitement d'image selon l'une quelconque des revendications 1 à 6, pour obtenir une luminance de sortie (Lo) des pixels de l'image de sortie à partir des composantes de couleur non linéaires (R', G', B') des pixels respectifs de l'image d'entrée.

8. Appareil de conversion de plage dynamique selon la revendication 7, dans lequel la deuxième luminance maximale est supérieure à la première luminance maximale.

9. Appareil de conversion de plage dynamique selon la revendication 7, dans lequel la deuxième luminance maximale est inférieure à la première luminance maximale.

10. Procédé de traitement d'images, comprenant :

le calcul d'une luminance d'entrée à partir de composantes de couleur non linéaires (R', G', B') qui spécifient une couleur d'entrée ; et
après avoir effectué ce calcul de la luminance d'entrée, l'application d'une fonction de mappage de luminance à la luminance d'entrée pour obtenir une luminance de sortie, ou une fonction de mappage de luminance correspondante à un codage de luminance obtenu à partir de la luminance d'entrée,
dans lequel le calcul de la luminance d'entrée comprend :

le calcul d'une valeur de sortie en fonction de P d'une première valeur d'entrée et d'une deuxième valeur d'entrée aux entrées respectives.
ladite fonction :

sélectionne comme valeur principale l'une desdites première valeur d'entrée et deuxième valeur d'entrée qui est supérieure ou égale à l'autre parmi ladite première valeur d'entrée et ladite deuxième valeur d'entrée ;
sélectionne l'autre valeur entre la première et la deuxième valeur d'entrée comme valeur secondaire.
calcule la valeur de sortie comme une pondération linéaire de la valeur principale et de la valeur secondaire si la valeur principale est inférieure à un produit de la valeur secondaire avec une constante, et détermine la valeur principale comme valeur de sortie dans le cas contraire.

le calcul de la luminance d'entrée comprenant :

l'application de la fonction P pour calculer une première valeur de sortie intermédiaire (V1) avec une première (R") et une deuxième (B") d'un ensemble de composantes de couleur intermédiaires (R", G", B") à ses entrées respectives ; et
puis l'application de la fonction P pour calculer une deuxième valeur intermédiaire (V2) avec la première valeur de sortie intermédiaire (V1) et une troisième (G") de l'ensemble des composantes de couleur intermédiaires à ses entrées respectives, et

le calcul de la luminance d'entrée comprenant en outre l'obtention de la luminance d'entrée (Li) comme une puissance de la deuxième valeur intermédiaire (V2),
les composantes de couleur intermédiaires (R", G", B") étant les valeurs pondérées respectives des composantes de couleur d'entrée non linéaires (R', G', B') multipliées par des pondérations respectives qui sont caractéristiques d'un système de codage vidéo primaire.

11. Procédé selon la revendication 10, dans lequel les composantes de couleur non linéaires (R', G', B') sont obtenues à partir d'une image d'entrée qui présente une première luminance maximale et la luminance de sortie (Lo) est fournie pour une image de sortie qui présente une deuxième luminance maximale différente de la première luminance maximale.

12. Décodeur vidéo (220) conçu pour recevoir un signal vidéo à grande plage dynamique comprenant un ensemble d'images d'entrée, lesquelles sont composées de pixels dont les couleurs sont définies par trois composantes de couleur additives. Ces composantes sont spécifiées comme des composantes de couleur non linéaires rouge, verte et bleue, définies selon une fonction de transfert optoélectronique ou électro-optique, ou comme une version matricielle 3x3 de ces composantes de couleur rouge, verte, et bleue non linéaires, telle qu'une représentation de couleur Y'CbCr, et conçu pour obtenir une fonction de mappage de luminance (F_ct), par exemple à partir d'une mémoire interne ou extraite des métadonnées reçues dans le signal vidéo, le décodeur étant conçu pour appliquer ladite fonction de mappage de luminance aux couleurs de pixels afin d'obtenir les luminances de pixels correspondantes des couleurs de sortie des images décodées respectives correspondant aux images d'entrée, dans lequel le décodeur vidéo comprend un appareil de traitement d'image (1) selon l'une quelconque des revendications d'appareil de traitement d'image 1 à 9 ci-dessus pour effectuer un tel mappage de luminance pour le décodage.

13. Encodeur vidéo (220) conçu pour recevoir un ensemble original d'images vidéo à grande plage dynamique, qui comprennent des pixels présentant des couleurs définies par trois composantes additives qui sont spécifiées comme des composantes non linéaires rouge, verte et bleue, définies selon une fonction de transfert optoélectronique ou électro-optique, ou une version matricielle 3x3 des composantes de couleur rouge, verte et bleue non linéaires, telle qu'une représentation Y'CbCr. Cet encodeur est configuré pour obtenir une fonction de mappage de luminance (F_ct), par exemple à partir d'une mémoire interne ou extraite de métadonnées reçues, l'encodeur étant configuré pour appliquer ladite fonction de mappage de luminance aux couleurs de pixels afin d'obtenir les luminances de pixels correspondantes des couleurs de sortie des images de sortie respectives correspondant aux images d'entrée, dans lequel le décodeur vidéo comprend un appareil de traitement d'image (1) selon l'une des revendications d'appareil de traitement d'image 1 à 9 ci-dessus, et une unité de formatage connectée à un canal de communication vidéo pour fournir une version formatée des images de sortie.

14. Système de communication vidéo comprenant un encodeur vidéo (221) pour l'encodage des données vidéo d'entrée (MAST_HDR) d'une source vidéo (ImSRC) vers un signal vidéo compressé ou non compressé (Im_COD), un canal de transmission (204, 205, 206) pour transmettre le signal vidéo compressé, et un décodeur vidéo (220) pour décoder le signal vidéo transmis en un signal vidéo reconstitué (Im_RHDR), dans lequel le décodeur vidéo (220) comprend un appareil de traitement d'image tel que revendiqué dans l'une quelconque des revendications d'appareil de traitement d'image 1 à 9.

15. Procédé de communication de vidéo, comprenant :

la réception de données vidéo en entrée (MAST_HDR) à partir d'une source vidéo (ImSRC) ;
l'encodage des données vidéo d'entrée en un signal vidéo compressé (Im_COD) ;
la transmission du signal vidéo compressé ;
la réception du signal vidéo compressé ;
le décodage du signal vidéo compressé en un signal vidéo reconstitué, ledit décodage comprenant l'obtention de composantes de couleur non linéaires (R', G', B') à partir d'une image d'entrée représentée par le signal vidéo compressé et fournissant, en utilisant le procédé selon la revendication 10, une luminance de sortie (Lo) pour une image de sortie, dans lequel l'image d'entrée présente une première luminance maximale et l'image de sortie présente une deuxième luminance maximale différente de la première luminance maximale.

FIG. 1

FIG. 2

FIG. 3

FIG. 4

FIG. 5A

FIG. 5B

FIG. 6A

FIG. 6B

FIG. 7A

FIG. 7B

FIG. 8

FIG. 9

FIG. 10A

FIG. 10B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20210272497 A

- US 20190082186 A